# EUROPÄISCHE PATENTANMELDUNG

(11) **EP 0 927 832 A1**
(43) Veröffentlichungstag der Anmeldung: **07.07.1999**
(21) Anmeldenummer: 97121491.1
(22) Anmeldetag: 06.12.1997
(51) Int. Cl.: F16D 3/223

(54) **Verfahren zur Rohlingsherstellung von für Gleichlaufgelenke bestimmten Kugelkäfigen**

(71) Anmelder: Iprotec Maschinen- und Edelstahlprodukte GmbH, 32469 Petershagen-Friedewalde (DE)
(72) Erfinder:
(74) Vertreter: Stenger, Watzke & Ring Patentanwälte

(57) **Zusammenfassung**

Die Erfindung betrifft ein Verfahren zur Rohlingsherstellung von für Gleichlaufgelenke bestimmten Kugelkäfigen, die mit kugelringförmigen inneren und äußeren Lagerflächen (4, 3) und Kugeltaschen (5) für die Aufnahme von drehmomentübertragenden Kugeln versehen sind. Um solche Kugelkäfige (2) schnell, kostengünstig und möglichst vollautomatisch herstellen zu können, wird erfindungsgemäß vorgeschlagen, daß ausgehend von einem Rohr (1), dessen Außendurchmesser in etwa dem Außendurchmesser des zu fertigenden Kugelkäfigs (2) entspricht, die nachfolgenden Arbeitsschritte ausgeführt werden:
a) spanloses Formen eines in etwa der Breite des Kugelkäfigs (2) entsprechenden Endbereichs des Rohres (1) zur Ausbildung der kugelringförmigen inneren und äußeren Lagerflächen (4, 3),
b) Ausbilden der Kugeltaschen (5) in den kugelringförmigen Lagerflächen (3, 4) und
c) Abstechen des in den Arbeitsschritten a) und b) bearbeiteten Endbereichs des Rohres (1).

## Beschreibung

Die Erfindung betrifft ein Verfahren zur Rohlingsherstellung von für Gleichlaufgelenke bestimmten Kugelkäfigen, die mit kugelringförmigen inneren und äußeren Lagerflächen und Kugeltaschen für die Aufnahme von drehmomentübertragenden Kugeln versehen sind.

Bei Kraftfahrzeugen mit Vorderantrieb werden die gelenkten Räder angetrieben. Deshalb müssen Vorderradachswellen Gelenke haben, die sowohl das Ein- und Ausfedern der Räder als auch deren Lenkeinschlag zulassen. Um einen möglichst gleichförmigen Antrieb der Räder zu ermöglichen, werden hierzu Gleichlaufgelenke (homokinetische Gelenke) verwendet. Bei Gelenken an Vorderachswellen werden hierbei unter anderem als Topfgelenke ausgebildete Gleichlauf-Festgelenke verwendet, während bei Gelenken an Hinterachswellen als Topfgelenke ausgebildete Gleichlauf-Verschiebegelenke verwendet werden, die neben einer Beugung des Gelenks eine axiale Verschiebung ermöglichen.

Diese Topfgelenke bestehen aus einem auf das radseitige Achswellenende aufgesetzten Kugelstern, auf dem der Kugelkäfig mit Kugeln sowie die mit der Radantriebswelle verbundene Kugelschale sitzen. Bei dem Gleichlauf-Festgelenk weisen Kugelschale und Kugelstern gekrümmte Bahnen auf, auf denen sich die Kugeln bewegen. Bei dem Gleichlauf-Verschiebegelenk sind die Bewegungsbahnen an Kugelschale und Kugelstern eben ausgebildet.

Bei den aus der Praxis bekannten, aus Kugelstern, Kugelkäfig und Kugelschale bestehenden Gleichlaufgelenken werden die mit kugelringförmigen inneren und äußeren Lagerflächen und Kugeltaschen für die Aufnahme der drehmomentübertragenden Kugeln versehenen Kugelkäfige in einer Vielzahl von Arbeitsschritten auf verschiedenen Maschinen hergestellt. Ausgehend von einem hohlen Rohr, das in etwa den Außendurchmesser des zu fertigenden Kugelkäfigs aufweist, wird bei den bekannten Verfahren zur Herstellung der Rohlinge für Kugelkäfige zunächst ein Rohrabschnitt von dem Ausgangsrohr abgetrennt, dessen Breite in etwa der Breite des zu fertigenden Kugelkäfigs entspricht. Anschließend werden die kugelringförmigen inneren und äußeren Lagerflächen in einem Schmiedeprozeß geformt, danach gedreht und die Kugeltaschen auf einer weiteren Maschine aus den kugelringförmigen Lagerflächen ausgestanzt, bevor diese Rohlinge nach einer Einsatzhärtung zur Fertigbearbeitung gelangen.

Nachteilig bei diesem bekannten Herstellungsverfahren ist einerseits, daß die Herstellung eines jeden Kugelkäfigs mehrere Arbeitsschritte umfaßt, die auf verschiedenen Maschinen ausgeführt werden müssen und andererseits bei der Schmiedebearbeitung und dem Ausstanzen der Kugeltaschen Gefügestörungen und Spannungen im Werkstoff des Kugelkäfigs erzeugt werden. Aufgrund dieser Vielzahl von Arbeitsschritten auf verschiedenen Maschinen ist die Herstellung dieser Kugelkäfige zeitaufwendig und teuer.

Der Erfindung liegt die **Aufgabe** zugrunde, ein Verfahren zur Rohlingsherstellung von für Gleichlaufgelenke bestimmten Kugelkäfigen bereitzustellen, welches eine einfache, kostengünstige und vollautomatisierbare Herstellung von Kugelkäfigen ermöglicht.

Die **Lösung** dieser Aufgabenstellung ist erfindungsgemäß dadurch gekennzeichnet, daß ausgehend von einem Rohr, dessen Außendurchmesser in etwa dem Außendurchmesser des zu fertigenden Kugelkäfigs entspricht, die nachfolgenden Arbeitsschritte ausgeführt werden:
a) spanloses Formen eines in etwa der Breite des Kugelkäfigs entsprechenden Endbereichs des Rohres zur Ausbildung der kugelringförmigen inneren und äußeren Lagerflächen,
b) Ausbilden der Kugeltaschen in den kugelringförmigen Lagerflächen und
c) Abstechen des in den Arbeitsschritten a) und b) bearbeiteten Endbereichs des Rohres.

Durch dieses erfindungsgemäße Herstellungsverfahren ist es möglich, den Kugelkäfig eines Gleichlaufgelenks ohne bleibende Gefügeveränderungen und Spannungen herzustellen. Weiterhin ist bei dem erfindungsgemäßen Herstellungsverfahren vorteilhaft, daß die gesamte Herstellung des Rohlings am Rohr erfolgt, d. h. daß das bearbeitete Werkstück erst dann vom zylindrischen Rohr abgestochen wird, wenn alle Bearbeitungsschritte zur Herstellung des Rohlings abgeschlossen sind. Diese Arbeitsweise macht es möglich, daß sämtliche Arbeitsschritte zur Herstellung des Rohlings auf derselben Maschine, beispielsweise einer mehrspindligen Bearbeitungsmaschine, erfolgen können. Durch die taktweise Bearbeitung an einer mehrspindligen Bearbeitungsmaschine ist es möglich, den gesamten Ablauf zur Herstellung des Kugelkäfigrohlings vollautomatisch durchzuführen. Im Gegensatz zur bekannten Produktion in verschiedenen Arbeitsschritten auf verschiedenen Maschinen weist das erfindungsgemäße Herstellungsverfahren einen eindeutigen Zeit- und Kostenvorteil auf. Das spanlose Formen der inneren und äußeren Lagerflächen im Arbeitsschritt a) erfolgt vorteilhafterweise durch Rollen.

Gemäß einer weiteren Ausführungsform des erfindungsgemäßen Verfahren wird vorgeschlagen, daß zwischen den Arbeitsschritten b) und c) eine Drehbearbeitung der zuvor bearbeiteten Flächen erfolgt. Diese Drehbearbeitung, die ebenfalls an derselben Maschine ausgeführt werden kann, kann erforderlich sein, wenn der zu fertigende Rohling Außen- oder Innenkonturen aufweist, die beim vorhergehenden Rollen und/oder Ausbilden der Kugeltaschen nicht oder nicht exakt genug bearbeitet werden können.

Die Automatisierung des Herstellungsverfahrens kann gemäß einer praktischen Ausführungsform der Erfindung dadurch gesteigert werden, daß die Werkstücke vor dem Abstechen im Arbeitsschritt c) - beispielsweise durch Induktionshärtung - gehärtet werden.

Schließlich wird gemäß einer praktischen Ausführungsform der Erfindung vorgeschlagen, daß im Arbeitsschritt b) die Kontur der Kugeltaschen insbesondere im Bereich der Anlageflächen der Kugeln in axialer Richtung des Gelenkes mit einem Aufmaß hergestellt werden. Diese Herstellung der Kugelanlageflächen mit einem Aufmaß erfolgt, um bei der nachfolgenden Fein- und Endbearbeitung des Kugelkäfigs den exakten Kugelsitz innerhalb der Kugeltaschen ausbilden zu können.

Das Ausbilden der Kugeltaschen im Arbeitsschritt b) kann in Abhängigkeit vom Werkstückmaterial und/oder der Bearbeitungsanforderungen mittels einer Drehbearbeitung oder einer Fräsbearbeitung erfolgen.

Weitere Merkmale und Vorteile der Erfindung ergeben sich aus der nachfolgenden Beschreibung der zugehörigen Zeichnung, in der schematisch das erfindungsgemäße Herstellungsverfahren dargestellt ist. In der Zeichnung zeigt:
- Fig. 1a bis 1d: eine schematische Abfolge der einzelnen Arbeitsschritte des erfindungsgemäßen Verfahrens zur Herstellung des Kugelkäfigrohlings;
- Fig. 2a: eine Seitenansicht eines fertigen Kugelkäfigrohlings und
- Fig. 2b: einen Längsschnitt entlang der Schnittlinie IIb-IIb gemäß Fig. 2a.

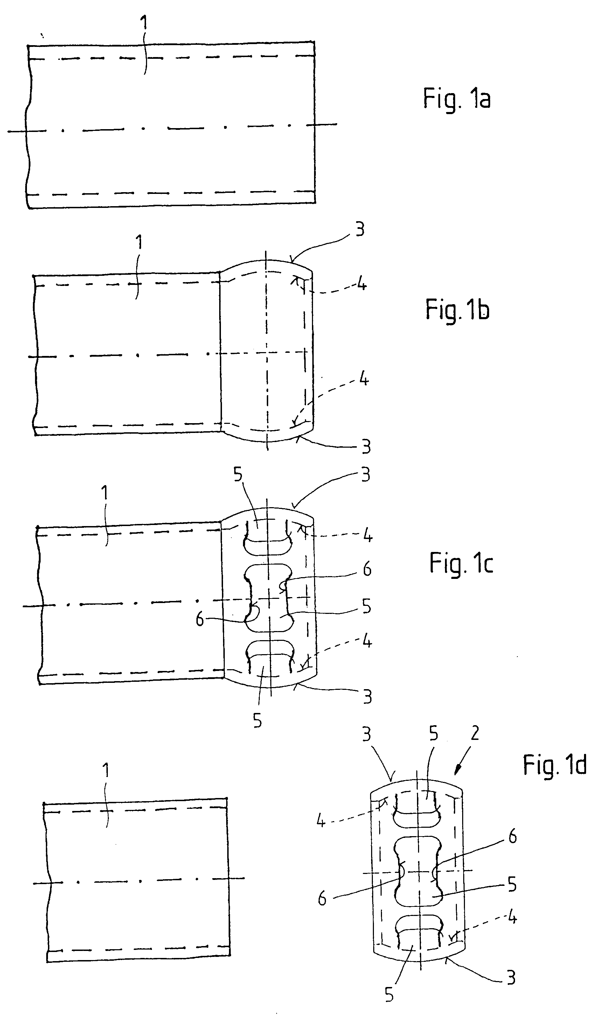

In den Abbildungen Fig. 1a bis 1d sind die einzelnen Arbeitsschritte zur Herstellung eines Kugelkäfigrohlings ausgehend von einem zylindrischen Rohr 1 schematisch so dargestellt, daß jede Abbildung das Ausgangs- oder Endprodukt des jeweiligen Arbeitsschrittes zeigt. Die Bearbeitungsmaschine sowie die zugehörigen Werkzeuge sind aus Gründen einer übersichtlicheren Darstellung nicht dargestellt.

Fig. 1a zeigt das als Ausgangswerkstoff dienende zylindrische Rohr 1, dessen Außendurchmesser in etwa dem Außendurchmesser des zu fertigenden Kugelkäfigs 2 entspricht. Die Bearbeitung des Rohres 1 erfolgt beispielsweise auf einem Mehrspindelautomaten, in dem das zu bearbeitende Rohr taktweise von einer Bearbeitungsstation zur anderen verfahren wird.

Ausgehend von der Zuführung des Rohres 1 in Fig. 1a wird das Rohr 1 zur nächsten Bearbeitungsstation verfahren, an der beispielsweise mittels eines Rollverfahrens die kugelringförmigen äußeren Lagerflächen 3 und inneren Lagerflächen 4 ausgebildet werden, wie dies in Fig. 1b dargestellt ist. Der Abbildung Fig. 1b ist neben der Ausgestaltung der äußeren und inneren Lagerflächen 3 und 4 ein weiteres wesentliches Merkmal dieses Herstellungsverfahrens zu entnehmen, nämlich, daß die Herstellung des Kugelkäfigrohlings am Rohr 1 erfolgt, d. h. ein Endbereich des Rohres 1 bearbeitet wird, ohne diesen vom Rohr 1 abzutrennen. Nach Ausgestaltung der äußeren und inneren Lagerflächen 3 und 4 wird das solchermaßen bearbeitete Rohr 1 zur nächsten Bearbeitungsstation weitergetaktet. An dieser Bearbeitungsstation werden durch Fräsen in den Lagerflächen 3 und 4 Kugeltaschen 5 für die Aufnahme der - nicht dargestellten - drehmomentübertragenden Kugeln ausgefräst. Im dargestellten Ausführungsbeispiel ist dabei die Kontur der Kugeltaschen 5 so ausgebildet, daß die Anlageflächen 6 der Kugeln in axialer Richtung des Gelenkes ein Aufmaß aufweisen. Dieses Aufmaß wird in einem nachfolgenden Fertig- und Endbearbeitungsprozeß zur Ausbildung der exakten Anlageflächen 6 durch eine spanabhebende Bearbeitung abgetragen. Selbstverständlich können alle bei der Rohlingsherstellung erzeugten Konturen und Flächen ein Aufmaß aufweisen, das erst bei der Fertigbearbeitung nach dem Härten abgetragen wird.

Erst nachdem der Rohling des Kugelkäfigs 2 soweit hergestellt worden ist, wird der Rohling vom Rohr 1 abgestochen, wie dies in Fig. 1d dargestellt ist.

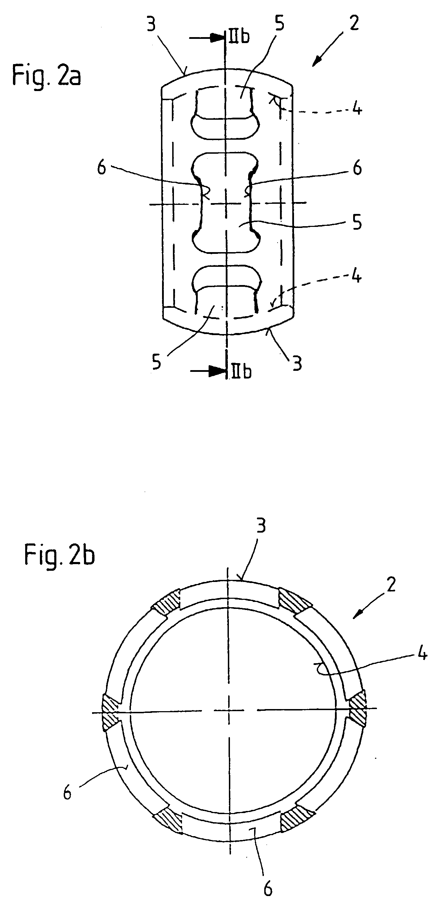

Fig. 2a und 2b zeigen eine Seitenansicht sowie einen Längsschnitt durch einen nach dem Verfahren gemäß Fig. 1a bis 1d hergestellten Rohlings eines Kugelkäfigs 2.

Das voranstehend beschriebene Verfahren zeichnet sich dadurch aus, daß es insbesondere bei der Verwendung eines Mehrspindelautomaten vollautomatisch auf derselben Maschine durchgeführt werden kann, wobei ein jedes zu bearbeitendes Rohr 1 taktweise von Bearbeitungsstation zu Bearbeitungsstation verfahren wird. Dieses taktweise Bearbeiten auf nur einer Maschine wird insbesondere dadurch möglich, daß der herzustellende Kugelkäfigrohling erst im letzten Bearbeitungsschritt vom Rohr 1 abgetrennt wird.

Weiterhin zeichnet sich das voranstehend beschriebene Verfahren gegenüber den Herstellungsverfahren des Standes der Technik dadurch aus, daß keine gefügeverändernden Stanz- und Schmiedebearbeitungen des Rohlings erfolgen, welche erst wieder durch eine nachfolgende thermische Behandlung behoben werden können.

### Bezugszeichenliste

- 1: Rohr
- 2: Kugelkäfig
- 3: äußere Lagerfläche
- 4: innere Lagerfläche
- 5: Kugeltasche
- 6: Anlagefläche

## Patentansprüche

1. Verfahren zur Rohlingsherstellung von für Gleichlaufgelenke bestimmten Kugelkäfigen, die mit kugelringförmigen inneren und äußeren Lagerflächen (4, 3) und Kugeltaschen (5) für die Aufnahme von drehmomentübertragenden Kugeln versehen sind,
**dadurch gekennzeichnet,**
daß ausgehend von einem Rohr (1), dessen Außendurchmesser in etwa dem Außendurchmesser des zu fertigenden Kugelkäfigs (2) entspricht, die nachfolgenden Arbeitsschritte ausgeführt werden:
a) spanloses Formen eines in etwa der Breite des Kugelkäfigs (2) entsprechenden Endbereichs des Rohres (1) zur Ausbildung der kugelringförmigen inneren und äußeren Lagerflächen (4, 3),
b) Ausbilden der Kugeltaschen (5) in den kugelringförmigen Lagerflächen (3, 4) und
c) Abstechen des in den Arbeitsschritten a) und b) bearbeiteten Endbereichs des Rohres (1).

2. Verfahren nach Anspruch 1, dadurch gekennzeichnet, daß zwischen den Arbeitsschritten b) und c) eine Drehbearbeitung der zuvor bearbeiteten Flächen erfolgt.

3. Verfahren nach Anspruch 1 oder 2, dadurch gekennzeichnet, daß vor dem Abstechen im Arbeitsschritt c) eine Härtung der Werkstücke, beispielsweise mittels Induktionshärtung, erfolgt.

4. Verfahren nach mindestens einem der Ansprüche 1 bis 3, dadurch gekennzeichnet, daß im Arbeitsschritt b) die Kontur der Kugeltaschen (5) insbesondere im Bereich der Anlageflächen (6) der Kugeln in axialer Richtung des Gelenkes mit einem Aufmaß hergestellt wird.

5. Verfahren nach Anspruch 1, dadurch gekennzeichnet, daß das spanlose Formen der inneren und äußeren Lagerflächen im Arbeitsschritt a) mittels Rollen erfolgt.

6. Verfahren nach Anspruch 1, dadurch gekennzeichnet, daß das Ausbilden der Kugeltaschen im Arbeitsschritt b) mittels einer Drehbearbeitung erfolgt.

7. Verfahren nach Anspruch 1, dadurch gekennzeichnet, daß das Ausbilden der Kugeltaschen im Arbeitsschritt b) mittels einer Fräsbearbeitung erfolgt.

8. Verfahren nach mindestens einem der Ansprüche 1 bis 7, dadurch gekennzeichnet, daß sämtliche Arbeitsschritte zur Herstellung des Rohlings auf derselben Maschine erfolgen.
